# EUROPEAN PATENT SPECIFICATION

(11) **EP 1 809 400 B1**
(45) Date of publication and mention of the grant of the patent: **30.06.2010**
(21) Application number: 05796779.6
(22) Date of filing: 25.10.2005
(51) Int. Cl.: B01D 29/70, A01K 63/04

(54) **POND FILTERS**
TEICHFILTER
FILTRES A BASSIN

(30) Priority: 28.10.2004 GB 0423970
(43) Date of publication of application: 25.07.2007
(73) Proprietor: Hozelock Limited, Aylesbury, Buckinghamshire HP19 8SU (GB)
(72) Inventor: PATEL, Kaushik Ishwarbhai, Northwoood, Middlesex HA6 1QJ (GB); SCRIMGEOUR, Ian David, Witney, Oxfordshire OX28 5NN (GB); SEAMAN, Rob Brian, Aylesbury, Buckinghamshire HP22 4JU (GB)
(74) Representative: Faulkner, Thomas John
(86) International application number: PCT/GB2005/004140
(87) International publication number: WO 2006/046037

(56) References cited:
- FR-A- 2 461 514
- GB-A- 833 327
- GB-A- 903 800
- US-A1- 2004 020 842
- US-B1- 6 171 480

## Description

This invention relates to pond filters.

In existing pond filters the mechanical filtration is often achieved using open cell foams and sometimes more rigid equivalents. After a period of time the filter media becomes blocked and requires cleaning. With a compressible media such as open cell foam this requires considerable mechanical effort and only partial cleaning is achieved. In existing pond filters which make use of more rigid alternatives the filter media, which is often a single block, has to be removed from the filter for cleaning and washed down using a pressurised water supply. This is an inconvenient step for the user.

It is an object of the present invention to overcome at least some of the problems associated with the prior art.

FR 2 461 514 describes filters for the purification of liquids and gases. The filters include a plurality of thread like filter elements held in a chamber between grids. The threads may be vibrated in a cleaning process.

US 2004/020842 describes a pond filter in which 3 discs of filtering foam are held on a tube with plates either side. One of the plates is in the form of a basket for holding biological media. This basket can be moved between one position for filtering and another position for cleaning.

GB 903,800 describes filtration apparatus for cleaning and purifying water for use in swimming pools. The apparatus has a cleaning mode in which flow through the filter is reversed. In this mode, paddles serve to agitate and help clean shredded foam filter media provided in the apparatus.

According to one aspect of the present invention there is provided a pond filter comprising a housing having a fluid inlet, a fluid outlet, and in a flow path between the inlet and the outlet, an entrapment chamber for receiving a plurality of filter media elements, the filter further comprising an agitation member disposed in the entrapment chamber for agitating filter media elements carried in the filter during a cleaning process and characterised in that the entrapment chamber is partially defined by a moveable wall portion, moveable within the housing to alter the volume of the chamber for allowing selective trapping and releasing of carried filter media elements.

According to another aspect of the present invention there is provided a pond filter assembly comprising a pond filter as defined above and a plurality of filter media elements provided in the entrapment chamber of the filter.

The filter media elements may be incompressible filter media elements.

In this specification the expression incompressible filter media elements is used to distinguish from open cell foam filter media. It will be appreciated that incompressibility is a relative characteristic and what is intended by that term here is filter media elements which in practical terms are incompressible in normal use of the device. Such filter media elements might also be termed rigid.

Each filter media element may have a body which defines at least one water flow path through the element. Each filter media element may be hollow. In other alternatives each filter element may have no water flow path through the element. Each element may be solid. Each filter element may comprise at least one settling portion on which particles may settle out of fluid flowing through the filter. Each filter element may comprise a plurality of ribs and/or recesses to provide at least one settling portion.

Each filter element may be close to neutrally buoyant.

The entrapment chamber may be arranged so that, in use, flow of fluid through the housing holds carried filter media elements in position.

The entrapment chamber may be arranged so that carried filter media elements are held against movement within the chamber by contact with wall portions of the chamber. In the pond filter assembly, the entrapment chamber may be filled with filter media elements to a point where each filter element is held against movement within the chamber by virtue of contact with other filter elements and/or contact with a wall portion of the entrapment chamber.

The entrapment chamber may be partially defined by at least one perforated wall portion. A first perforated wall portion may be fixedly mounted in the housing.

The moveable wall portion may be removably mountable in the housing.

Securing means may be provided for holding the movable wall portion at a selected position within the housing. The securing means may be arranged to allow the movable wall portion to be held in one of a plurality of selected positions within the housing. This can allow different controlled volumes of the chamber to be achieved and/or allow the movable wall portion to be held in contact with and/or out of contact with carried filter material elements.

Alternatively the moveable wall portion may be held in position by virtue of its weight and/or flow of fluid through the housing during use. This can be true even where the moveable wall portion is not moveable in such a way as to alter the volume of the chamber.

The wall portion may be moveable between a first position in which access to the interior of the chamber is obstructed by the moveable wall portion and a second position allowing access to the interior of the chamber.

Securing means may be provided for securing the moveable wall portion in the first position.

The moveable wall portion may press against filter media elements carried in the chamber in use. The moveable wall portion may press against the filter media elements by virtue of, one of, or a combination of: its weight, flow of fluid through the filter in use, and being held in pressing contact with carried filter media by securing means.

The moveable wall portion may be a perforated wall portion.

Preferably the moveable wall portion is disposed on an up stream side of the entrapment chamber. This can help to ensure that flow of fluid into the chamber for filtering tends to help hold the moveable wall portion and hence carried filter media in position.

Preferably the fixed wall portion is disposed on a down stream side of the entrapment chamber. Again this can help to ensure the filter media are held in position in use.

One or more of the perforated wall portions may comprise a perforated plate.

The chamber may be defined by a side wall of the housing and a pair of perforated plates, each plate defining a respective end of the chamber.

The agitation member may be part of agitation means which comprises a user operable actuator disposed outside of the housing. The actuator may be a handle. The agitation member may be stick-like. The agitation member may be a paddle. The agitation member may be multi-pronged. The agitation member may be mounted for rotation within the housing.

The filter may comprise a secondary outlet via which fluid may leave the housing when cleaning the filter. The filter may comprise valve means for controlling flow of fluid from the housing. The valve means may be arranged to allow a user to switch between outlets. The housing may comprise the secondary outlet. Alternatively the secondary outlet may be provided separately from the housing. The secondary outlet may be provided down stream of the main outlet.

Each outlet will typically be arranged to receive a hose which can carry away fluid that has passed through the filter. When the filter is filtering, the fluid leaving the housing will be returned to the pond. During cleaning however, this is undesirable. If there is a single outlet a connected hose can be moved so that the debris from cleaning does not enter the pond. If two outlets are provided however, there is no need to re-direct the main outlet if the valve means is used to shut off flow back to the pond and allow flow out of the secondary outlet.

The filter may comprise reversing valve means for reversing the flow of fluid through the filter during cleaning. This can help dislodge settled material from the filter elements.

There may be a common valve means or a common actuator for controlling both flow out of the housing and reversing flow through the housing. In this way a single valve or single actuator might be used by a user to switch between a filtering mode and a cleaning mode. In filtering mode fluid flow would be in one direction through the housing and fluid would leave by the main outlet. In cleaning mode fluid flow would be in an opposite direction and fluid would leave by a secondary outlet.

According to a further aspect of the present invention there is provided a method of cleaning a pond filter assembly comprising a housing having a fluid inlet, a fluid outlet, and, in a flow path between the inlet and the outlet, an entrapment chamber partially defined by a moveable wall portion and carrying a plurality of filter media elements, the assembly further comprising an agitation member disposed in the entrapment chamber and the method comprising the steps of: moving the moveable wall portion to release the entrapped filter elements; and using the agitation member to agitate the filter elements within the housing, whilst maintaining a flow of fluid through the housing.

The method may comprise the further step of moving an outlet hose of the filter from a filtering position to a cleaning position before commencing cleaning.

The method may comprise the further step of switching a valve controlling flow of fluid from the housing from a filtering position to a cleaning position before commencing cleaning.

The provision of a filter that can trap filter media elements against movement during normal use and release these for cleaning and incorporates an agitation member for agitating the elements during cleaning process gives rise to a particularly efficient design that is simple for a user to operate.

Whilst as mentioned above some embodiments may make use of flow reversal during a cleaning mode, the provision of a filter in which flow during cleaning is in the same direction as flow during filtering can lead to greater simplicity in design. The applicants have also found that such an arrangement gives good performance.

In some embodiments the filter may comprise a secondary outlet via which fluid may leave during cleaning and a valve having a filtering position and a cleaning position, the filter being arranged so that when the valve is in the filtering position there is a fluid flow path from the inlet to the outlet with exit via the secondary outlet obscured and when the valve is in the cleaning position there is a fluid flow path from the inlet to the secondary outlet with exit via the outlet obscured.

The valve may be disposed in the fluid flow path downstream of the entrapment chamber and upstream of the outlet. The filter may be arranged so that flow between the inlet and the valve is in the same direction through the filter during filtering and cleaning.

As mentioned above the filter comprises an agitation member for agitating carried media elements during cleaning. The agitation member may comprise a stick-like portion which is spaced from and substantially parallel to an axis of the filter. Where the agitation member is arranged for rotation about an axis, the stick-like portion may be substantially parallel to the axis of rotation. There may be a plurality of stick-like portions which are mutually parallel.

The agitation member may be carried on the moveable wall disposed in the housing. Preferably the moveable wall partially defines the entrapment chamber and carries the agitation member or a plurality of agitation members. The agitation means may comprise the moveable wall portion.

Where the agitation member is arranged for rotation within the housing, the agitation member may rotate with the moveable wall portion.

The agitation member may comprise an extension portion which is mounted for movement relative to the remainder of the agitation member. The extension portion may be sprung loaded. The filter may be arranged so that as the moveable wall portion is moved between a capturing position and a release position contact between the agitation member and the moveable wall is maitained due to operation of the extension portion.

The filter may comprise a flow duct in the flow path. The handle of the agitation means may be connected to agitation member via the flow duct. The flow duct may be mounted for rotation within the housing. The flow duct may be connected to the moveable wall. The flow duct may be arranged for axial movement within the housing.

The valve for controlling flow of fluid through the filter may be a shuttle valve.

The valve may comprise a portion of the flow duct. The valve may comprise a casing portion through which the flow duct passes. Flow paths may exist between the wall of the flow duct and the casing portion. The casing portion may be mounted so as to be stationary relative to the housing of the filter.

The casing portion maybe generally annular. The flow duct may be generally cylindrical and carry a pair of O-rings for selectively sealing with the casing portion. The flow duct may comprise at least one aperture in a region between the pair of O-rings. The flow duct may be axially moveable between a first position in which a first of the O-rings seals with the casing portion and a second position in which a second of the O-rings seals with the casing portion. The first position may correspond to the filtering position and the second position may correspond to the cleaning position.

In one set of embodiments the filter may comprise a handle for moving the wall portion to alter the volume of the entrapment chamber and for moving the agitation member during agitation. The handle may be mounted to a moveable assembly comprising the wall portion and the agitation member. The moveable assembly may be arranged for rotational and axial movement within the housing. The handle may also be for operating the valve. The moveable assembly may also comprise a part of the valve. The moveable assembly may comprise the flow duct.

The housing may comprise a viewing portion through which the interior of the housing can be seen. The viewing portion may comprise a portion of see through material. The material may be at least one of colourless, transparent and translucent. The viewing portion may provide a view of the entrapment chamber. The provision of the viewing portion may allow the cleaning operation to be observed.

Embodiments of the present invention will now be described by way of example only with reference to the accompanying drawings in which:
- Figure 1: shows a schematic sectional view of a pond filter;
- Figure 2: shows a perspective view of another pond filter;
- Figure 3: is a sectional view of the filter of Figure 2 in a filtering mode; and
- Figure 4: is a sectional view of the filter of Figure 2 in a cleaning mode.

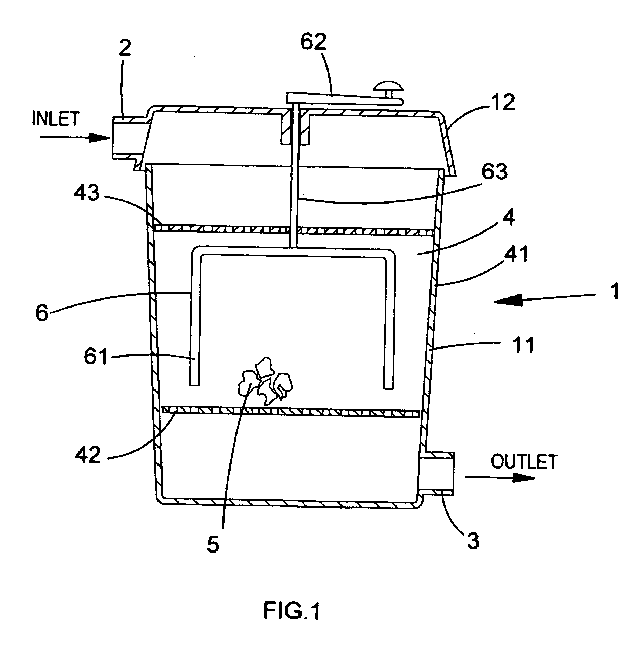

Figure 1 schematically shows a pond filter which generally comprises a housing 1 having a base portion 11 and a top portion 12. The top portion 12 is releasably fixed to the base portion 11 such that the top portion 12 may be removed from the base portion 11 to allow access into the interior of the housing.

A fluid inlet 2 is provided in the housing 1, in particular in the top portion 12 of the housing, and a fluid outlet 3 is provided in the housing, in this case in the bottom portion 11. The fluid inlet 2 is arranged to receive a fluid supply hose which will carry water (typically pumped) from a pond. The fluid outlet 3 is similarly arranged to carry a hose, in this case to channel water away from the filter and back to the pond.

It will be seen that there is a fluid flow path between the inlet 2 and the outlet 3 and fluid which is introduced into the housing 1 for filtering follows this flow path and in doing so passes through a filter media entrapment chamber 4.

The filter media entrapment chamber 4 has its side walls defined by the side walls of the lower part 11 of the housing 1. In this embodiment the housing 1 is generally cylindrical with the base portion 11 of the housing being slightly frusto-conical. Thus, the side walls of the entrapment chamber 4 are curved. The opposing end walls 42 and 43 of the entrapment chamber are formed by generally circular perforated plates 42 and 43. The plate 42 which is furthest from the inlet 2, and in this embodiment with the orientation as shown in Figure 1 is the lower plate, is fixed in position in the housing 1. On the other hand the perforated plate 43 nearest to the inlet, and in this embodiment with the orientation shown in the drawing, the upper plate, is movably mounted within the housing 1. In this embodiment the upper plate 43 is in fact removably mounted in the housing and thus may be removed altogether to allow access into the interior of the entrapment chamber 4. In other embodiments however, the movable plate 43 may simply be movable within the housing without being removable during normal usage/maintenance of the device.

In operation, the entrapment chamber 4 is filled with a plurality of incompressible filter media elements 5, only a few of which are actually shown in the drawing. In practice these filter media elements completely fill the entrapment chamber 4 and thus are held stationary in position within the housing 1 by virtue of contact between the filter media elements themselves 5 and contact with wall portions of the entrapment chamber 4, i.e. contact with the side wall 41 of the housing and the plates 42 and 43. A typical filter might hold a hundred or so, or in some cases even thousands of, filter media elements 5, and thus these are relatively small compared to the size of the chamber 4.

The movable plate 43 is movable within the housing 1 in such a way as to allow varying of the volume of the entrapment chamber 4. In this embodiment, the movable plate 43 is held in pressing contact with the filter media elements 5 provided in the entrapment chamber 4 by virtue of the weight of the plate and more importantly by virtue of the pressure created by the flow of pond water through the filter in normal filtering operation. Thus, in the orientation shown in Figure 1, as pond water flows in through the inlet 2 into the housing this presses down on the movable perforated plate 43 which then presses against the carried filter media elements 5.

However, when cleaning is to be carried out, the movable plate 43 is moved via an actuator (not shown) away from contact with the filter media elements 5 such that the volume of the chamber 4 is increased and in effect the filter media are released.

An agitator arrangement 6 is provided in the filter and this comprises a two pronged agitator member 61 provided in the entrapment chamber 4 and an agitating handle 62 provided outside of the housing. The agitator arrangement 6 is mounted for rotational movement in the housing 1 by virtue of a connector rod 63 which connects the handle 62 to the agitator prongs 61 and passes through the upper portion 12 of the housing from the interior to the exterior of the housing 1. During cleaning of the filter media 5, once the elements have been released by movement of the movable plate 43, the user may operate the handle 62 by rotating this relative to the housing 1 and hence rotate the agitator prongs 61 to stir up the filter media elements 5 and help ensure that debris is released from these during cleaning.

Each filter media element 5 is an incompressible element in the sense that in normal operation of the device the element will not be compressed by the forces used to hold the elements in position within the entrapment chamber 4. The actual shape and construction of the filter element 5 can take one of many forms. However, preferably each filter media element defines at least one flow path through its own body and thus may for example, comprise a hollow tube portion and/or apertures through plate-like portions. Furthermore, each filter element 5 preferably comprises uneven surface features such as ribs and/or recesses to provide portions on which debris may settle out of the fluid as it passes through the filter.

Preferably each media filter element 5 is close to neutrally buoyant within the fluid, i.e. pond water, which will flow through the filter in use. Having the filter media elements being close to neutrally buoyant helps achieve good circulation of the filter media elements 5 during agitation whilst cleaning.

As mentioned above, in normal filtering operation, pond water will be fed to the inlet 2, normally via a suitable hose, and similarly the filtered water will flow out of the outlet 3 and, normally via a suitable hose, return to the pond. With such a set up, before cleaning of the filter is commenced the user will remove the water return hose from the pond and redirect this, say to a flower bed, or some other suitable location, so that the debris dislodged from the filter media elements 5 during cleaning is not returned to the pond. It will be recognised that water flow into the filter is maintained during cleaning.

In an alternative to such a set up a valve may be provided to control flow of fluid out of the filter. In particular, two hoses may be provided, one for carrying away filtered water for return to the pond and one for carrying away the products of the cleaning process. In some cases two outlets may be provided in the housing each with a separate hose, and valve means may be provided for controlling which of these outlets acts as the outlet for the filter. In other circumstances, a valve may be provided downstream of the main outlet 3 of the housing which may be used by a user to select which hose is used for the outflow of fluid from the filter. Such an outlet control valve may form part of the filter even where this is provided downstream of the main outlet 3.

In a further alternative, means may be provided for reversing flow of fluid through the filter during cleaning. Thus, in the device shown in the drawing and with the orientation shown in the drawing, it will be seen that during filtering, fluid flow enters the top of the filter, progresses downwards and exits through the bottom of the filter. In such a case if the flow were reversed then flow would enter at the base of the filter housing 1, progress upwards through the housing and exit through the top of the housing. Reversing the flow in this way can help to dislodge material from the filter media elements 5. In some instances a common valve or common actuator may be provided to allow switching between normal direction flow and reverse flow as well as switching between a normal outlet returning water to the pond and a cleaning outlet for allowing the outflow of cleaning products from the housing.

It should also be noted that whilst the present filter is designed to have flow from top to bottom during filtering this is not essential. Thus filters may be designed which are arranged so that the flow during filtering is from the bottom to the top of the device, is radially outwards from a centre inlet or any other configuration which allows the filter media elements 5 to be trapped in the appropriate entrapment area 4 and held against movement during filtering.

In the present filter, the removable perforated plate 43 is provided to help trap the filter media elements during filtering and this is preferred. In alternatives, however, a filter may be provided where there is no such plate and rather the flow of water through the device and the remaining design of the entrapment chamber 4 are sufficient to hold the filter media elements stationary enough in use to provide effective filtering.

It will be noted that a significant advantage of the present filter is that cleaning may be carried out without having to remove the filtering medium from the filter and without having to use pressurised water supplies or other specialised equipment to achieve cleaning.

The present filter includes the agitator mechanism 6 which is operable from the outside of the filter housing 1 by the user. In a less preferred, but simpler device, no agitator mechanism would be provided and the user would merely remove the top portion of the housing 12, the upper movable plate 43 and agitate the filter media 5 directly with a stick or other utensil while directly applying a flow of water through the open top of the base portion 11 of the housing.

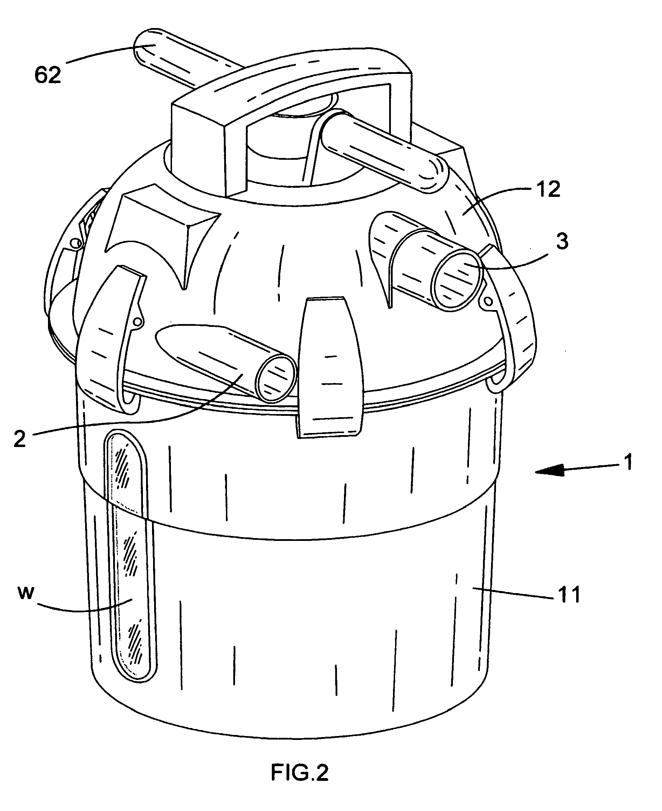

Figures 2, 3 and 4 show another pond filter which is similar to that shown in Figure 1, but has some differing features. In the description of Figures 2, 3 and 4 the same reference numerals are used to refer to parts in the filter of Figures 2, 3 and 4 which correspond to those of the filter shown in Figure 1.

The pond filter of Figures 2, 3 and 4 again generally comprises a housing 1 having a base portion 11 and a top portion 12. Again, the top portion is releasably fixed to the base portion such that the top portion 12 may be removed from the base portion 11 to allow access to the interior of the housing.

There is a fluid inlet 2 into the housing, which inlet 2 is provided in the top portion 12 of the housing and an outlet 3 from the housing. In this filter, the outlet 3 is provided in the top portion 12 of the housing. The filter of Figures 2, 3 and 4 also comprises a secondary outlet 3' which is used to allow fluid to leave the housing 1 during a cleaning operation whereas the main outlet 3 is used to allow fluid to leave the housing 1 during normal operation as will be explained in more detail below. Thus in this embodiment the inlet 2 and two outlets 3, 3' are all provided in the same portion of the housing 12. Thus, they are provided in close proximity at one end of the housing 1.

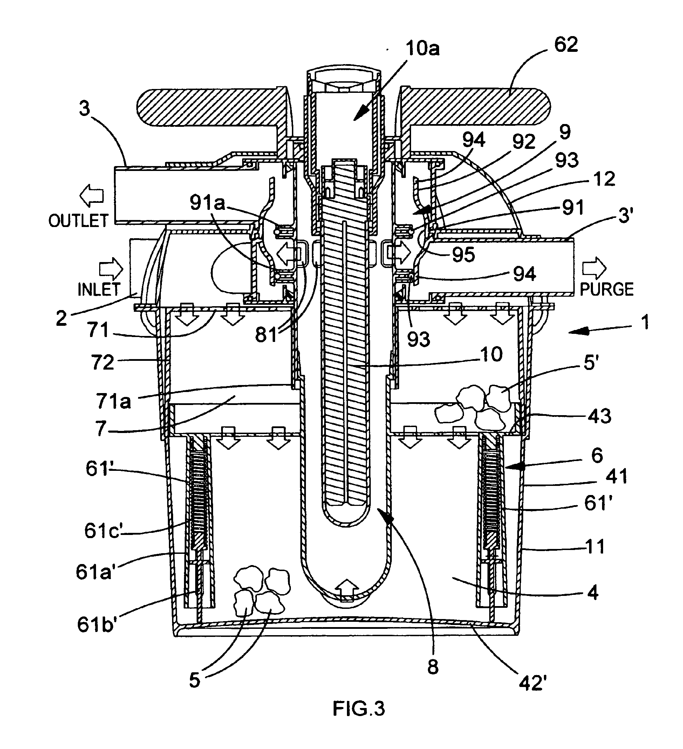

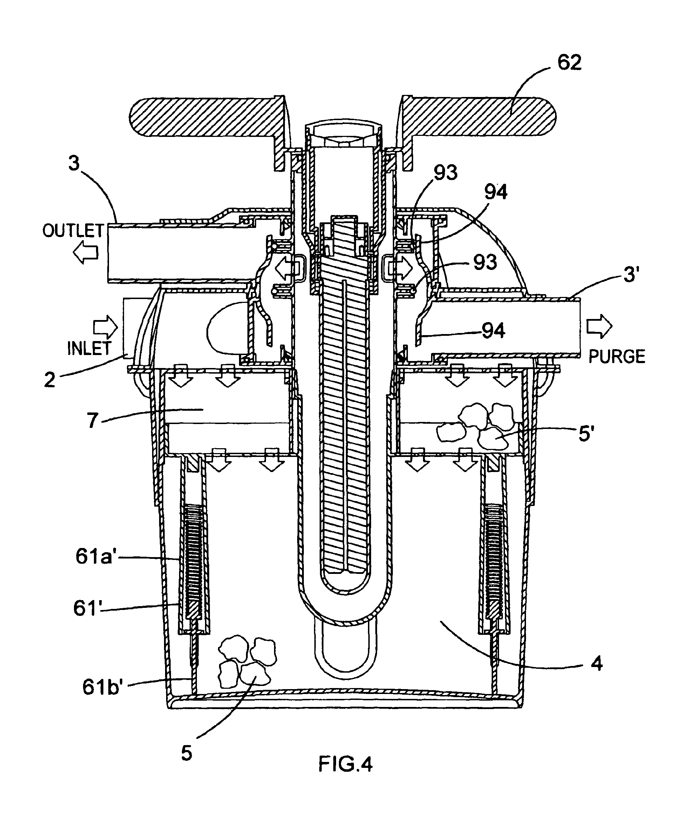

The filter of Figures 2, 3 and 4 again comprises a filter media entrapment chamber 4 which in this case is defined by the cylindrical side wall 41 of the filter housing 1 and opposing end walls 42' and 43. In this case the first of the opposing end walls 42' is a base part of the housing 1 whereas the second end wall 43 of the entrapment chamber 4 comprises a moveable, generally circular, perforated plate 43. Again in operation, the entrapment chamber 4 is filled with a plurality of incompressible filter media elements 5 (of the same type as described above in relation to Figure 1), only a few of which are shown in Figures 3 and 4. In this respect the entrapment chamber 4 of the filter chamber in Figures 2, 3 and 4 is very much like that of the filter shown in Figure 1.

In this embodiment, however, in use further filter media elements 5' are provided in a region 7 on the other side of the perforated wall portion 43 within the housing 1. In this region 7 fewer filter media elements 5' are provided compared with the available volume in the region 7 during filtering. This means that the filter media elements 5' in the region 7 are left free to move within the region 7 rather than being trapped in position as are those 5 within the entrapment chamber 4. A second perforated plate 71 and a surrounding side wall 72 are provided to define the external boundaries of the region 7 to be occupied moving filter media elements 5'.

The filter of Figures 2, 3 and 4 again comprises an agitator arrangement 6 which again has an agitating handle 62 provided outside of the housing 1, but the structure of the agitator arrangement 6 in the filter of Figures 2, 3 and 4 is rather different than that of the filter of Figure 1. The agitator arrangement 6 in the present embodiment comprises a pair of stick-like agitator members 61' which correspond fairly closely to the agitator prongs 61 of the filter shown in Figure 1. The agitator arrangement 6 is arranged for rotation within the housing 1 by operation of the handle 62. The stick-like agitator members 61' are arranged so as to be spaced from and generally parallel to the axis of rotation of the agitator arrangement 6. The agitator members 61' are connected to the moveable perforated plate 43 which in turn is connected to the agitator handle 62 via a central flow duct 8. The handle 62, central flow duct 8, plate 43 and agitator members 61' are arranged to rotate as a whole rotatable assembly within the housing 1 via operation of the handle 62. It should be noted that in this specification, reference to rotation does not necessarily mean that there must be the possibility of continuous rotation in one sense without any restriction on movement. For example, in some alternatives it might be that the rotatable assembly is arranged to be rotatable through say, approximately 180° in one direction before being rotated back through 180° in the opposite direction. In the present embodiment, however, complete and continuous rotation of the rotatable assembly is possible.

The filter assembly of Figures 2, 3 and 4 comprises a valve 9 for controlling from which of the outlets 3, 3' fluid from the filter can flow.

The filter has two basic modes of operation, a filtering or "run" mode as illustrated in Figure 3 and a cleaning or "purge" mode as illustrated in Figure 4. When the filter is in the filtering mode, the valve 9 ensures that there is a fluid flow path from the inlet 2 through the main body of the housing 1 through the central flow duct 8 and out of the main outlet 3. On the other hand when the filter is in the cleaning mode the valve 9 ensures that there is a flow path from the inlet 2 through the main body of the housing 1 and the central flow duct 8 and out of the secondary outlet 3'.

The valve 9 is arranged as a shuttle valve and comprises a portion 91 of the central duct 8 and a casing portion 92 which in this embodiment is generally annular and surrounds the respective portion 91 of the central flow duct 8. The portion 91 of the central flow duct 8 which forms part of the valve 9 comprises a pair of spaced circumferential ribs 91 a each of which supports a respective O-ring 93. Furthermore, there are a plurality of apertures 81 in the side wall of the central duct 8 in the region between the circumferential ribs 91 a which provide a fluid flow path from the interior of the flow duct 8 to the exterior in the region of the valve 9.

The casing portion 92 of the valve 9 comprises a spaced pair of seating portions 94, each of which is arranged so that a respective one of the O-rings 93 can seat against it. As shown in Figure 3, a first of the O-rings 93 seats against a first of the seating portions 94 when the filter is in the filtering mode and as shown in Figure 4, a second of the O-rings 93 seats against the second seating portion 94 when the filter is in the cleaning mode.

Furthermore, although the casing portion 92 of the valve 9 is generally annular, it has a central belly portion 95 having a greater diameter than at the seating portions 94. The spacing between the belly portion 95 and the seating portions 94 in an axial direction is chosen together with the spacing in an axial direction between the O-rings 93 so that when one of the O-rings 93 is aligned with its respective seating portion 94, the other of the O-rings 93 is aligned with the belly portion 95.

This ensures that there is a flow path from the apertures 81 around one of the O-rings 93 and past its respective seat portion 94 and away from the valve 9 when the valve is in either the appropriate position for filtering or cleaning. This flow path from the central duct 8 to the main outlet 3 in filtering mode can be seen in Figure 3 and the corresponding flow path from the central duct 8 to the secondary outlet 3' in cleaning mode can be seen in Figure 4.

It will be noted that the arrangement of the valve 9 allows the central flow duct 8 to be rotated (to allow agitation of the media 5) whilst maintaining appropriate seals to provide control over the fluid flow path available through the filter. The friction between the O-ring seal 93 and respective seat 94 also give some resistance to axial and rotational movement of the rotatable assembly.

It will be noted that because the central flow duct 8 passes through the region 7 for moving filter media 5a, that region 7 is generally annular. The central flow duct 8 also extends mostly through the entrapment chamber 4 in both the filtering mode as shown in Figure 3 and cleaning mode as shown in Figure 4.

The second perforated plate 71 has a central generally cylindrial collar portion 71a which projects away from the main body of the plate 71 and surrounds part of the central flow tube 8. This collar portion 71 a acts as a stop portion preventing further extraction of the handle 62 when the moveable plate 43 abuts with the end of the collar 71, i.e. when it is in position shown in Figure 4.

A UV lamp 10 is provided within the central flow duct 8 for irradiating fluid as it flows along the flow duct 8 past the lamp 10. The UV lamp 10 is arranged axially within the flow duct 8. The necessary electrial components for driving the lamp 10 are provided in a cap portion 10a which is provided between the two arms of the handle 62.

Each of the agitator member 61' comprises a main generally cylindrial outer portion 61a', an extension portion 6 1 b', and a spring 61 c' which is provided within the outer portion 61a' and arranged to act on the extension portion 61b'. This means that the extension portion 61b is spring loaded by the spring 61c against the base portion 42' of the housing 1. This means that as the movable wall portion 43 is moved within the housing 1 contact between the agitation member 61 and the base portion 42' may be maintained.

As can be seen in Figure 2, the wall of the bottom part 11 of the housing 1 comprises a viewing window W. This window W is of colourless material in the present embodiment and allows the state of the filter and/or a cleaning operation to be viewed. In particular the interior of the entrapment chamber may be viewed.

During operation, with the filter in the configuration shown in Figure 3, water from a pond is fed into the inlet 2, passes through the perforated plate 71 and into the region 7 filled with moving filter media elements 5'. These moving filter media elements 5' provide a perfect location for the growith of bacteria and as such may provide biological filtration of the pond water as it flows through this region 7. The water leaves this region 7 through apertures in the perforated plate 43 and enters the entrapment chamber 4. As mentioned above, in this chamber 4, in normal use there are a sufficient number of filter media elements 5 such that the filter media elements 5 are not free to move, but rather are trapped in position by contact with one another and the boundaries of the entrapment chamber 4. These static filter media elements 5 serve to provide primarily a mechanical filtration function. Water leaves the entrapment chamber 4 via an aperture into the central flow duct 8. As the water flows through the central flow duct 8, it passes the UV lamp 10 and is therefore irradiated. This radiation serves to suppress the growth of algae. The treated water then leaves the central flow duct 8 via the apertures 81 and enters the valve 9. Here it passes between what is the upper O-ring 93 in the orientation shown in Figure 3 and the valve casing 92 and out towards the outlet 3 from where the water may be returned to a pond.

It will be noted that in this configuration the extension portions 61b of the agitation members 61' are retracted to some extent within the respective cylindrical outer 61a'.

When it is desired to clean the filter a user changes the filter to the cleaning mode by pulling on the handle 62 to pull this away from the housing 1. In the orientation shown in Figure 4 this means pulling the handle 62 upwards. This movement of the handle 62 also moves the movable wall portion 43 so increasing the volume of the entrapment chamber 4 and releasing the previously trapped filter media elements 5. As this movement occurs the extension portions 61b' of the agitation members 61' are driven out of the cylindrical outers 61 a' by the springs 61c' and so remain in contact with the base 42' of the housing 1. The user may then rotate the handle 62 either round and round or backwards and forwards to move the central duct 8, the plate 43 and hence the agitation members 61' rotationally relative to the housing 1. This serves to agitate the filter media elements 5 in the entrapment chamber 4. Whilst this operation is carried out, water continues to be supplied to the unit via the inlet 2 passes through the moving media region 7, the entrapment chamber 4 and flushes released debris from the filter media elements 5 into the central flow duct 8. From here the water and released debris can flow through the duct 8, out of the aperatures 81 and through the valve 9 past what is the lower O-ring 53 in the orientation shown in Figure 4 and out to the secondary outlet 3' and from where it can be supplied via a hose to an appropriate location for the waste material.

Once the cleaning operation is complete as may, for example, be verified by viewing the interior of the entrapment chamber 4 through the viewing window W, the handle 62 may be returned to the position shown in Figure 3 and the filter returned to normal use.

It will be noted that the provision of a secondary outlet 3' as well as a main outlet 3 means that the return path to the pond as connected to the main outlet 3 need not be moved or disturbed during cleaning whilst allowing the waste material to be delivered to a location other than the pond.

## Claims

1. A pond filter comprising a housing (1) having a fluid inlet (2), a fluid outlet (3,3'), and in a flow path between the inlet and the outlet, an entrapment chamber (4) for receiving a plurality of filter media elements (5), the filter further comprising an agitation member (61, 61') disposed in the entrapment chamber (4) for agitating filter media elements carried in the filter during a cleaning process and **characterised in that** the entrapment chamber (4) is partially defined by a moveable wall portion (43), moveable within the housing to alter the volume of the chamber for allowing selective trapping and releasing of carried filter media elements (5).

2. A pond filter according to claim 1 which comprises a user operable actuator (62) disposed outside of the housing for moving the agitation member (61, 61').

3. A pond filter according to claim 1 or claim 2 in which the agitation member (61, 61') is mounted for rotation within the housing.

4. A pond filter according to any preceding claim in which the agitation member (61, 61') comprises an extension portion (61b') which is mounted for movement relative to the remainder of the agitation member (61') and is spring loaded (61c').

5. A pond filter according to any preceding claim in which the moveable wall portion (43) is removably mountable in the housing.

6. A pond filter according to any preceding claim which comprises securing means for holding the moveable wall portion (43) in one of a selected plurality of positions within the housing.

7. A pond filter according to any preceding claim which comprises a common valve means or a common actuator for controlling both flow out of the housing and reversing flow through the housing wherein in a filtering mode fluid flow is in one direction through the housing (1) and fluid leaves by a main outlet and in a cleaning mode fluid flow is in an opposite direction and fluid leaves by a secondary outlet.

8. A pond filter assembly comprising a pond filter according to any preceding claim and a plurality of filter media elements (5) provided in the entrapment chamber (4) of the filter.

9. A pond filter assembly according to claim 8 in which the filter media elements (5) are incompressible filter media elements.

10. A pond filter assembly according to claim 8 or claim 9 in which each filter media element (5) has a body which defines at least one water flow path through the element.

11. A pond filter assembly according to any one of claims 8 to 10 in which each filter element (5) is close to neutrally buoyant.

12. A pond filter assembly, according to any one of claims 8 to 11 in which the entrapment chamber (4) is filled with filter media elements (5) to a point where each filter element (5) is held against movement within the chamber by virtue of contact with other filter elements and/or contact with a wall portion of the entrapment chamber (4).

13. A method of cleaning a pond filter assembly comprising a housing (1) having a fluid inlet (2), a fluid outlet (3, 3'), and, in a flow path between the inlet and the outlet, an entrapment chamber (4) partially defined by a moveable wall portion (43) and carrying a plurality of filter media elements (5), the assembly further comprising an agitation member (61, 61') disposed in the entrapment chamber (4) and the method comprising the steps of:
moving the moveable wall portion (43) to release the entrapped filter elements (5); and using the agitation member (61, 61') to agitate the filter elements within the housing, whilst maintaining a flow of fluid through the housing (1).

## Patentansprüche

1. Ein Teichfilter, umfassend ein Gehäuse (1) mit einem Fluideinlass (2), einem Fluidauslass (3, 3') und einer Einschlusskammer (4) zum Aufnehmen einer Mehrzahl von Filtermedienelementen (5) in einem Fließweg zwischen dem Einlass und dem Auslass, während der Filter weiterhin ein Aufwühlelement (61, 61') umfasst, das in der Einschlusskammer (4) zum Aufwühlen von Filtermedienelementen angeordnet ist, die in dem Filter während eines Reinigungsprozesses getragen werden, **dadurch gekennzeichnet, dass** die Einschlusskammer (4) teilweise durch einen bewegbaren Wandbereich (43) definiert ist, der innerhalb des Gehäuses bewegbar ist, um das Volumen der Kammer abzuändern, um ein selektives Einschließen und Freilassen von getragenen Filtermedienelementen (5) zu gestatten.

2. Ein Teichfilter gemäß Anspruch 1, der einen von einem Nutzer betätigbaren aktuator (62) aufweist, der außerhalb des Gehäuses zum Bewegen des Aufwühlelements (61, 61') angeordnet ist.

3. Ein Teichfilter gemäß Anspruch 1 oder Anspruch 2, in dem das Aufwühlelement (61, 61') zur Drehung innerhalb des Gehäuses befestigt ist.

4. Ein Teichfilter gemäß einem der vorhergehenden Ansprüche, in dem das Aufwühlelement (61, 61') einen Ausdehnungsbereich (61b') umfasst, der zur Bewegung relativ zu dem Rest des Aufwühlelements (61') befestigt ist und federgeladen (61c') ist.

5. Ein Teichfilter gemäß einem der vorhergehenden Ansprüche, in dem der bewegbar Wandbereich (43) entfernbar in dem Gehäuse befestigbar ist.

6. Ein Teichfilter gemäß einem der vorhergehenden Ansprüche, der Befestigungsmittel zum Halten des bewegbaren Wandbereichs (43) in einer aus einer ausgewählten Mehrzahl von Positionen innerhalb des Gehäuses umfasst.

7. Ein Teichfilter gemäß einem der vorhergehenden Ansprüche, der ein gemeinsames Ventilmittel oder einen gemeinsamen Aktuator zum Steuern von beidern aufweist, einem Fluss aus dem Gehäuse und einem Umkehrfluss durch das Gehäuse, während in einem Filterbetrieb ein Fluidstrom in eine Richtung durch das Gehäuse (1) läuft und Fluid durch einen Hauptauslass ausströmt und in einem Reinigungsbetrieb läuft ein Fluidfluss in eine entgegengesetzte Richtung und Fluid verlässt das Gehäuse durch einen zweiten Auslass.

8. Eine Teichfilteranordnung, umfassend einen Teichfilter gemäß einem der vorhergehenden Ansprüche sowie eine Mehrzahl von Filtermedienelementen (5), die in der Einschlusskammer (4) des Filters bereitgestellt sind.

9. Eine Teichfilteranordnung gemäß Anspruch 8, in der die Filtermedienelemente (5) inkompressible Filtermedienelemente sind.

10. Eine Teichfilteranordnung gemäß Anspruch 8 oder Anspruch 9, in der jedes Filtermedienelement (5) einen Körper aufweist, der mindestens einen Wassertließweg durch das Element definiert.

11. Eine Teichfilteranordnung gemäß einem der Ansprüche 8 bis 10, in der jedes Filterelement (5) nahezu schwebefähig (neutrally buoyant) ist.

12. Eine Teichfilteranordnung gemäß einem der Ansprüche 8 bis 11, in der die Einschlusskammer (4) bis zu einem Punkt mit Filtermedienelementen (5) gefüllt ist, wo jedes Filterelement (5) entgegen einer Bewegung innerhalb der Kammer durch den Kontakt mit anderen Filterelementen und/oder Kontakt mit einem Wandbereich der Einschlusskammer (4) gehalten wird.

13. Ein Verfahren zum Reinigen einer Teichfilteranordnung umfassend ein Gehäuse (1) mit einem Fluideinlass (2), einem Fluidauslass (3, 3') und einer Einschlusskammer (4) in einem Strömungsweg zwischen dem Einlass und dem Auslass, die teilweise durch einen bewegbaren Wandbereich (43) definiert ist und eine Mehrzahl von Filtermedienelementen (5) trägt, während die Anordnung weiterhin ein Aufwühlelement (61, 61') umfasst, das in der Einschlusskammer (4) angeordnet ist, wobei das Verfahren die Schritte umfasst:
Bewegen des bewegbaren Wandbereichs (43), um die eingeschlossenen Filterelemente (5) freizugeben; und Verwenden des Aufwühlelements (61, 61'), um die Filterelemente innerhalb des Gehäuses zu bewegen, während ein Fluidfluss durch das Gehäuse (1) aufrechterhalten wird.

## Revendications

1. Filtre pour bassin comprenant un boîtier (1) ayant une entrée de fluide (2), une sortie de fluide (3, 3') et un trajet d'écoulement entre l'entrée et la sortie, une chambre de piégeage (4) pour recevoir une pluralité d'éléments de supports filtrants (5), le filtre comprenant en outre un élément d'agitation (61, 61') disposé dans la chambre de piégeage (4) pour agiter les éléments de supports filtrants entraînés dans le filtre pendant un procédé de nettoyage et **caractérisé en ce que** la chambre de piégeage (4) est en partie définie par une portion de paroi mobile (43), qui peut se déplacer dans le boîtier pour modifier le volume de la chambre afin de permettre un piégeage et une libération sélectifs d'éléments de supports filtrants entraînés (5).

2. Filtre pour bassin selon la revendication 1, qui comprend un dispositif d'actionnement (62) actionnable par un utilisateur et disposé à l'extérieur du boîtier pour déplacer l'élément d'agitation (61, 61'),

3. Filtre pour bassin selon la revendication 1 ou la revendication 2 dans lequel l'élément d'agitation (61, 61') est monté à rotation dans le boîtier.

4. Filtre pour bassin selon l'une quelconque des revendications précédentes, dans lequel l'élément d'agitation (61, 61') comprend une partie d'extension (61b') qui est montée pour se déplacer par rapport au restant de l'élément d'agitation (61') et est sollicitée par un ressort (61c').

5. Filtre pour bassin selon l'une quelconque des revendications précédentes dans lequel la portion de paroi mobile (43) peut être montée de manière amovible dans le boîtier.

6. Filtre pour bassin selon l'une quelconque des revendications précédentes, qui comprend des moyens de fixation pour maintenir la portion de paroi mobile (43) dans une position sélectionnée parmi une pluralité sélectionnée de positions à l'intérieur du boîtier.

7. Filtre pour bassin selon l'une quelconque des revendications précédentes, qui comprend un moyen à soupape commun ou un dispositif d'actionnement commun pour commander à la fois l'écoulement hors du boîtier et l'inversion de l'écoulement à travers le boîtier, dans lequel, en mode de filtration, l'écoulement de fluide se fait dans un sens à travers le boîtier (1) et le fluide sort par une sortie principale et en mode de nettoyage, l'écoulement de fluide se fait dans le sens opposé et le fluide sort par une sortie secondaire.

8. Ensemble de filtre pour bassin comprenant un filtre pour bassin selon l'une quelconque des revendications précédentes et une pluralité d'éléments de supports filtrants (5) aménagés dans la chambre de piégeage (4) du filtre.

9. Ensemble de filtre pour bassin selon la revendication 8, dans lequel éléments de supports filtrants (5) sont des éléments de supports filtrants incompressibles.

10. Ensemble de filtre pour bassin selon la revendication 8 ou la revendication 9, dans lequel chaque élément de support filtrant (5) a un corps qui définit au moins un trajet d'écoulement d'eau à travers l'élément.

11. Ensemble de filtre pour bassin selon l'une quelconque des revendications 8 à 10, dans lequel chaque élément de filtre (5) est proche d'une flottaison neutre.

12. Ensemble de filtre pour bassin selon l'une quelconque des revendications 8 à 11, dans lequel la chambre de piégeage (4) est rempli d'éléments de supports filtrants (5) jusqu'à un point où chaque élément de filtre (5) est maintenu contre tout mouvement à l'intérieur de la chambre en raison du contact avec d'autres éléments de filtre et/ou du contact avec une portion de paroi de la chambre de piégeage (4).

13. Procédé de nettoyage d'un ensemble de filtre pour bassin comprenant un boîtier (1) ayant une entrée de fluide (2), une sortie de fluide (3, 3'), et, dans un trajet d'écoulement entre l'entrée et la sortie, une chambre de piégeage (4) en partie définie par une portion de paroi mobile (43) et entraînant une pluralité d'éléments de supports filtrants (5), l'ensemble comprenant en outre un élément d'agitation (61, 61') disposé dans la chambre de piégeage (4) et le procédé comprenant les étapes consistant à :
déplacer la portion de paroi mobile (43) pour libérer les éléments de supports filtrants piégés (5) ; et utiliser l'élément d'agitation (61, 61') pour agiter les éléments de supports filtrants à l'intérieur du boîtier tout en maintenant un écoulement de fluide à travers le boîtier (1).
